# EUROPEAN PATENT SPECIFICATION

(11) **EP 2 935 822 B1**
(45) Date of publication and mention of the grant of the patent: **10.01.2018**
(21) Application number: 13864357.2
(22) Date of filing: 25.11.2013
(51) Int. Cl.: F01P 7/16, B60T 1/087, F01P 3/12, G05D 23/02, G05D 23/19, G05D 23/30, B60T 10/02, F16D 65/78, F16D 57/00, F01P 3/20, B60T 5/00

(54) **COOLING SYSTEM IN A VEHICLE**
KÜHLSYSTEM IN EINEM FAHRZEUG
SYSTÈME DE REFROIDISSEMENT DANS UN VÉHICULE

(30) Priority: 18.12.2012 SE 1251444
(43) Date of publication of application: 28.10.2015
(73) Proprietor: Scania CV AB, 151 87 Södertälje (SE)
(72) Inventor: KARDOS, Zoltan, S-151 35 Södertälje (SE); HALL, Ola, S-117 67 Stockholm (SE)
(74) Representative: Scania CV AB
(86) International application number: PCT/SE2013/051384
(87) International publication number: WO 2014/098711

(56) References cited:
- EP-A2- 2 037 097
- EP-A2- 2 037 097
- WO-A1-2012/148344
- WO-A1-2012/148344
- WO-A2-2010/004184
- DE-A1- 3 700 037
- DE-A1- 3 700 037
- DE-A1-102005 061 476
- JP-A- 2003 278 543
- US-B1- 6 546 899

## Description

### BACKGROUND AND PRIOR ART

The present invention relates to a cooling system in a vehicle according to the preamble to claim 1.

Heavy vehicles are often equipped with one or several supplementary brakes in order to reduce wear on the ordinary wheel brakes of the vehicle. Such a supplementary brake may be a hydraulic retarder. Oil is used as the working medium in a conventional hydraulic retarder. When the vehicle is braked with the aid of the retarder, the oil undergoes rapid heating. The warm oil is led to a heat exchanger where it is cooled by cooling fluid that circulates in the cooling system of the vehicle, before it is returned to the retarder for further use. A new type of retarder has been developed in which the oil is replaced by cooling fluid as the working medium. The cooling fluid in this case is heated directly in the retarder and not indirectly by oil. The temperature of the cooling fluid thus initially rises more rapidly than in a conventional retarder.

The cooling system comprises a thermostat with a sensor that senses the temperature of the cooling fluid after it has cooled the combustion engine. The thermostat leads the cooling fluid to the combustion engine without cooling when the sensor detects that the cooling fluid has a temperature that is lower than a regulating temperature, and to a cooler for cooling when the sensor detects that the cooling fluid has a temperature that is higher than the regulating temperature. The cooler is a component of the cooling system that can change the temperature of the cooling fluid rapidly. In a conventional cooling system it takes a certain period of time before the cooled cooling fluid from the cooler reaches the thermostat and the sensor, which is arranged at a relatively large distance from the cooler in the cooling system. The ability of the cooling system to react to rapidly changing temperatures of the cooling fluid is, therefore, low. The slow feedback may lead to what is known as "temperature cycling", in which the thermostat switches between an open and a closed condition during a relatively long period of time. As a consequence of this, the cooler is frequently exposed to large changes in temperature, leading to a shorter lifetime.

SE 532 354 reveals a cooling system with a thermostat and a sensor that senses the temperature of the cooling fluid temperature in a pilot line. The pilot line receives a small part of the flow of cooling fluid from an inlet line to the combustion engine. The sensor senses the temperature of the cooling fluid in this case after it has been cooled in the cooler. In this way, considerably more rapid feedback is obtained on the occasions in which the cooling fluid undergoes rapid changes in temperature in the cooler. The problem of temperature cycling can be essentially avoided with the aid of such a pilot line.

WO 2012/148344 shows a cooling system according to the preamble of claim 1.

### SUMMARY OF THE INVENTION

The object of the present invention is to provide a cooling system in a vehicle of the type mentioned in the introduction where the thermostat receives rapid feedback during operating conditions in which the cooling fluid undergoes rapid changes in temperature in connection with two components in the cooling system.

This object is achieved with the distinctive features in the characterising part of claim 1. There are two components in cooling systems of the type mentioned in the introduction that can change the temperature of the cooling fluid rapidly, namely the cooler and the component that can be activated intermittently. During operating conditions in which the thermostat opens, the cooling fluid that is led into the cooler undergoes rapid and abrupt cooling. During operating conditions in which the said component is activated the cooling fluid that cools the said component undergoes rapid and abrupt heating. The combustion engine is a third component in the cooling system that influences the temperature of the cooling fluid. The combustion engine does not normally influence the temperature of the cooling fluid as rapidly.

According to the present invention, the thermostat senses the temperature of the cooling fluid in a pilot line. The temperature of the cooling fluid can be sensed with the aid of a pilot line at other positions in the cooling system than the position at which the thermostat is located. The temperature of the cooling fluid is in this case sensed at two positions in the cooling system that are located essentially immediately downstream of the two components that can provide a rapid change in the temperature of the cooling fluid. With the aid of such a pilot line that alternately receives cooling fluid from two relevant positions in the cooling system, temperature changes in the cooling fluid can be rapidly indicated and followed by a correspondingly rapid regulation by the thermostat. In operating conditions in which the said component that can be activated intermittently is not activated or when it requires a small cooling power, the pilot line receives cooling fluid from the first section of line. In such operating conditions, the cooling system receives rapid feedback since the cooling fluid is led to the cooler, with a sudden decrease in temperature as a consequence. In operating conditions in which the said component has been activated and requires a high cooling power, cooling fluid is led to the pilot line through the second inlet section. In such operating conditions, the cooling system receives rapid feedback since the component is activated, with a sudden warming of the cooling fluid as a consequence.

According to one embodiment of the present invention the valve arrangement comprises a three-way valve. With the aid of a three-way valve the first inlet section and the second inlet section can be alternately connected to the pilot line in a simple and rapid manner. The said control means may comprise a control unit that is adapted to receive information with respect to at least one parameter that indicates whether the said component requires a lower or a higher cooling power of the cooling fluid than the said threshold value and to set the valve arrangement in the first condition or in the second condition with the aid of this information. Such a control unit may constitute an electrical control unit that receives information from a second control unit in the vehicle that controls, for example, the activation of the said component. The control unit may in this way receive information that indicates whether the said component has been activated and how great a cooling power is required by the cooling system in order to cool the component. Alternatively, the control unit may receive information from a sensor that senses a parameter that indicates whether the said component has been activated or not.

According to one embodiment of the present invention the said component is a hydraulic retarder. Hydraulic retarders are supplementary brakes that are normally used in heavy vehicles in order to reduce wear on the wheel brakes of the vehicle. In a conventional hydraulic retarder, a working medium in the form of oil is led through a compartment of toroidal shape that has been created by a rotor and a stator. The oil undergoes substantial heating when it brakes the rotor relative to the stator in the said compartment. The warm oil is led to a heat exchanger where it is cooled by the cooling fluid in the cooling system. In cases in which the retarder has been activated, the cooling system is heavily loaded and it is therefore of major importance that the cooling of the cooling fluid starts without delay after the retarder has been activated.

The hydraulic retarder may have cooling fluid as its working medium. In this variant of the hydraulic retarder, thus, cooling fluid is led through the toroidal compartment instead of oil. The cooling fluid here undergoes direct heating in the retarder. In this case, a more rapid heating of the cooling fluid takes place, and it is even more important to obtain cooling of the cooling fluid without delay than in the case in which the retarder is a conventional retarder.

According to one embodiment of the present invention the vehicle comprises also an exhaust gas brake and that the said control means is adapted to set the valve arrangement into the first condition or into the second condition depending on the pressure of the cooling fluid in the cooling system. A cooling fluid pump provides an increase in pressure of the cooling fluid by a value that is related to the rate of revolution of the cooling fluid pump. Cooling fluid pumps are essentially always driven by the combustion engine with an appropriate transmission. A pressure is obtained in this way in the cooling system that is related to the rate of revolution of the combustion engine. Heavy vehicles often comprise also an exhaust gas brake as a supplementary brake. An exhaust gas brake requires a high rate of revolution of the engine in order to provide effective braking. On occasions on which the retarder and the exhaust gas brake have been activated, an automatic gearing down of the vehicle takes place if the requirement arises, which results in the combustion engine always having a high rate of revolution when the supplementary brakes have been activated. The high rate of revolution of the combustion engine results in the cooling fluid pump achieving a high rate of revolution, which creates a high pressure in the cooling system. A high pressure in the cooling system is in this case an indication that the retarder has been activated.

According to one embodiment of the present invention the said control means is adapted to set the valve arrangement into the first condition or into the second condition depending on the pressure of the cooling fluid in the line that receives cooling fluid from the said component. The cooling fluid pump thus provides an increase in pressure that is relative to the rate of revolution of the cooling fluid pump. The pressure will be greatest in association with the outlet of the cooling fluid pump and it will gradually fall in the direction of flow of the cooling fluid towards the inlet of the cooling fluid pump. In this case, the valve arrangement is controlled by the pressure in the line that receives cooling fluid from the retarder. The pressure here is normally of a sufficiently high value to indicate that the retarder has been activated.

According to one embodiment of the present invention the first inlet section comprises a first one-way valve and a restriction and that the second inlet section a second one-way valve that is placed under load by a spring, whereby the said spring has been dimensioned such that the second one-way valve opens when the pressure in the cooling system exceeds a pre-determined level. Since the pressure in the inlet line to the combustion engine is greater than it is in the line that receives cooling fluid from the retarder, a restriction must be arranged in the first inlet section. The restriction may be constituted by the complete second inlet being provided with a flow channel that has smaller dimensions than the corresponding flow channel at the second section of line. Alternatively, the first section of line may be provided with a local restriction. The restriction also must be of such a magnitude that it compensates for the pressure with which the spring loads the second one-way valve in the second inlet section. The cooling fluid in the second section of line can, with such a solution, achieve a higher pressure than the cooling fluid in the first section of line. This is necessary for it to be possible to lead cooling fluid from the second section of line to the pilot line.

According to one embodiment of the present invention the cooling fluid pump is arranged in the line that leads cooling fluid into the combustion engine and that the first inlet section receives cooling fluid in the line at a position downstream of the cooling fluid pump. The cooling fluid here has its highest pressure in the cooling system at a position downstream of the cooling fluid pump. This facilitates the flow of cooling fluid through the first section of line to the pilot line. The pilot line may have an outlet that is located in a bypass line that leads cooling fluid from the thermostat to the inlet line of the combustion engine. The bypass line is located at a position that is further downstream relative to the pressurised side of the cooling fluid pump than the lines in the cooling system from which cooling fluid is led into the first section of line and into the second section of line. A pressure at the outlet of the pilot line that is lower than at the said inlet sections is in this way obtained. This difference in pressure makes possible a flow of cooling fluid from each one of the inlet sections to the pilot line and back to the ordinary cooling system without further flow components.

### BRIEF DESCRIPTION OF DRAWINGS

Preferred embodiments of the invention will be described as examples below with reference to attached drawings, of which:
- Figure 1: shows a cooling system in a vehicle according to a first embodiment of the invention,
- Figure 2: shows a cooling system in a vehicle according to a second embodiment of the invention, and
- Figure 3: shows a cooling system in a vehicle according to a third embodiment of the invention.

### DETAILED DESCRIPTION OF PREFERRED EMBODIMENTS OF THE INVENTION

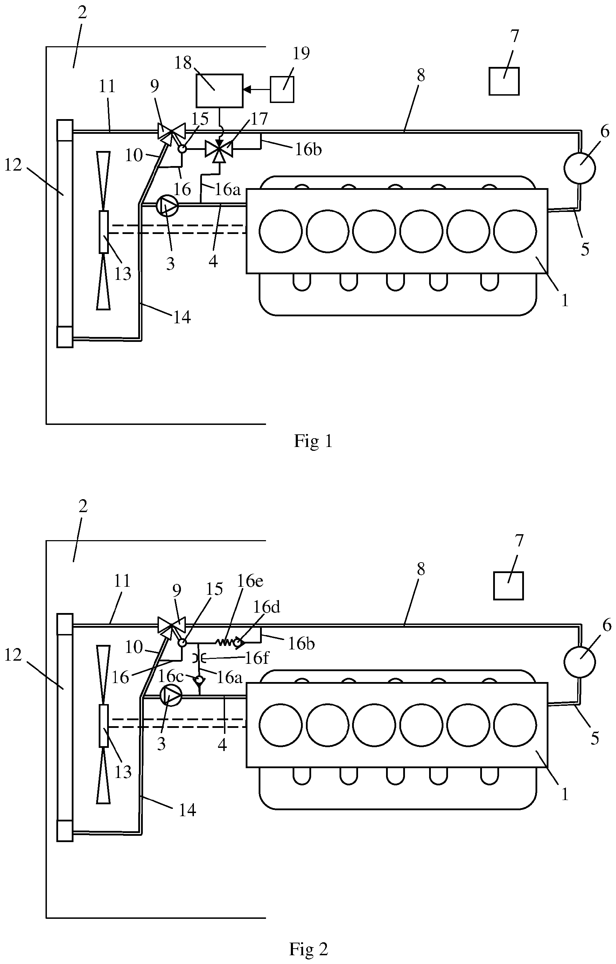

Figure 1 shows a cooling system to cool a combustion engine 1 in a schematically shown vehicle 2. The cooling fluid is circulated in the cooling system with the aid of a cooling fluid pump 3 that is arranged in an inlet line 4 to the combustion engine 1. After the cooling fluid has passed through the combustion engine 1 it is led, through the line 5, to a component that can be activated intermittently in the form of a hydraulic retarder 6. Thus the cooling system is used for the cooling of a further component, in addition to the combustion engine 1. The retarder 6 is in this case a hydraulic retarder that uses cooling fluid as its working medium. The vehicle 2 comprises also a further supplementary brake in the form of an exhaust gas brake 7, shown schematically. Supplementary brakes such as the retarder 6 and the exhaust gas brakes 7 are many times used in heavy vehicles 2 in order to reduce wear on the ordinary wheel brakes. The cooling fluid is led from the retarder 6, through an outlet line 8 of the retarder 6, to a thermostat 9. The thermostat 9 can be set into a closed condition in which it leads cooling fluid from the line 9 to a bypass line 10 that is connected by the inlet line 4 to the combustion engine 1. The thermostat 9 can be set into an open condition in which it leads cooling fluid from the line 8 to a cooler 12 through a line 11. The cooler 12 is mounted at the front part of the vehicle 2. A cooling fan 13 draws a cooling stream of air through the cooler 12 such that the cooling fluid that circulates through the cooler 12 undergoes effective cooling. After cooling fluid has been cooled in the cooler 12 it is led through a return line 14 back to the inlet line 4 and the cooling fluid pump 3.

The thermostat 9 is connected to a sensor 15. The sensor 15 may comprise a sheath with a closed compartment that is occupied by a wax body. The wax body has the property that it increases in volume when it melts and passes into the fluid phase. The closed compartment of the sensor 15 may be defined by a flexible membrane that is fixed attached at a control rod. The control rod is connected at its opposite end to the thermostat 9. When the wax is in a solid state, the thermostat is held in the closed condition with the aid of the membrane and the control rod. On occasions on which the wax inside the sensor 15 melts, it increases in volume such that the membrane and the control rod acquire a displacement that sets the thermostat 9 into its open condition. The sensor 15 is arranged in a pilot line 16.

The pilot line 16 comprises a first inlet section 16a that has an opening for the reception of cooling fluid from the inlet line 4 in a location between the cooling fluid pump 3 and the combustion engine 1. The first inlet section 16a leads cooling fluid to a three-way valve 17. The pilot line 16 comprises a second inlet section 16b that has an opening for the reception of cooling fluid from the outlet line 8 of the retarder. The opening of the second inlet section 16b is located in the outlet line 8 of the retarder 6. The second inlet section 16b leads cooling fluid also to the three-way valve 17. The pilot line 16 leads cooling fluid from the three-way valve 17 to an outlet opening in the bypass line 10. The sensor 15 is adapted to sense the temperature of the cooling fluid in the pilot line 16. A control unit 18 is adapted to control the three-way valve 17 using information from a braking control 19 or another component in the vehicle, which control can provide information at least about whether the retarder 6 is activated or not. It is advantageous that the control unit receive information also about the braking power or similar parameter of the retarder 6, which information is related to the cooling power that the retarder 6 requires.

Cooling fluid circulates around the cooling system during operation of the combustion engine 1. The control unit 18 receives information from the braking control 19 that indicates whether the retarder is activated or not. When the control unit 18 receives information that indicates that the retarder 6 is not activated, it places the three-way valve 17 into its first condition. Cooling fluid is thus led from the first inlet section 16a to the pilot line 16. The sensor 15 senses in this way the temperature of the cooling fluid in the inlet line 4 to the combustion engine 1. If the cooling fluid has a temperature that is lower than the regulating temperature of the thermostat 9, the thermostat 9 is set into its closed condition. The cooling fluid in the line 8 is led in this case to the bypass line 10 and thus to the combustion engine 1 without cooling. If the sensor 15 senses that the cooling fluid has a temperature that is higher than the regulating temperature of the thermostat 9, the thermostat 9 is set into its open condition. The cooling fluid in the line 8 is led in this case to the cooler 12 for cooling before it is led to the combustion engine 1.

Following a cold start of the vehicle, the thermostat 9 initially leads the cooling fluid to the bypass line 10 and to the combustion engine 1 without cooling. When the cooling fluid has warmed up to the regulating temperature, the thermostat 9 opens such that cooling fluid is led to the cooler 12. The cooling fluid obtains in this case a suddenly lowered temperature in the cooler 12. Since the pilot line 16 receives cooling fluid, through the inlet section 16a, from the inlet line 4, the cooling system receives a rapid indication that the temperature of the cooling fluid has fallen. The thermostat 9 is closed and cooling fluid is again led without cooling to the combustion engine 1, during a period. With such a rapid feedback and control of the thermostat 9, a stable temperature of the cooling fluid can be obtained relatively rapidly and with relatively few resettings of the thermostat 9. The problem of temperature cycling can in this way be avoided.

When the control unit 18 receives information from the brake control 19 that indicates that the retarder 6 has been activated, it sets the three-way valve 17 into its second condition. Cooling fluid is thus led from the second inlet section 16b to the pilot line 16. The sensor 15 senses in this way the temperature of the cooling fluid in the outlet line 8 of the retarder. The thermostat 9 has a regulating temperature that has been dimensioned according to the temperature that cooling fluid has in the inlet line 4 to the combustion engine 1. The temperature of the cooling fluid in the outlet line 8 of the retarder is essentially always higher than it is in the inlet line 4 to the combustion engine 1. In particular, when the retarder 6 has been activated, the cooling fluid will essentially always have a temperature that is higher than the regulating temperature of the thermostat 9. The sensor 15 senses that the cooling fluid has a higher temperature than the regulating temperature and the thermostat 9 is thus set into an open condition as soon as the retarder 6 has been activated. This results in the cooling fluid receiving optimal cooling as soon as the retarder 6 has been activated. Since a retarder 6 essentially always requires a high cooling power, it is an advantage that the thermostat 9 be set into the open condition as soon as possible and that it is retained in this condition during the complete period that the retarder 9 is activated. Alternatively, the control unit 18 can estimate the cooling power of the retarder 6 and reset the three-way valve 17 only when the retarder 6 has a cooling power that lies above a threshold value that is greater than zero.

Figure 2 shows an alternative embodiment of the cooling system. In this case the first inlet section 16a comprises a one-way valve 16c and a restriction 16f. The second inlet section 16b comprises a one-way valve 16d and a spring 16e that defines an opening pressure for the one-way valve 16d. The restriction 16f is dimensioned such that a fall in pressure is obtained in the first inlet line 16a of a magnitude that ensures that the cooling fluid in the first section of line 16a acquires a lower pressure than the cooling fluid in the second section of line 16b in connection with the pilot line 16. During operating conditions in which the pressure in the outlet line 8 of the retarder is not sufficiently high to open the one-way valve 16d, cooling fluid is led from the first section of line 16a to the pilot line 16. During operating conditions in which the pressure in the line 8 is sufficiently high to open the one-way valve 16d, cooling fluid is led from the second section of line 16b to the pilot line 16 since the cooling fluid in the second section of line 16b has a higher pressure than the cooling fluid in the first section of line 16a in connection to the pilot line 16.

The cooling fluid pump 3 is driven in conventional manner by the combustion engine 1 using a suitable transmission, not shown in the drawings. The cooling fluid pump 3 achieves in this way a rate of revolution that is related to the rate of revolution of the combustion engine 1. The increase in pressure that the cooling fluid undergoes when it is set under pressure by the cooling fluid pump 3 varies with the rate of revolution of the cooling fluid pump 3 and thus with the rate of revolution of the combustion engine 1. The pressure of the cooling fluid in the cooling system will thus be higher as the cooling system pump 3 and the combustion engine 1 demonstrate higher rates of revolution. The magnitude of the pressure decreases gradually with the distance from the pressurised side of the cooling fluid pump 3 to its suction side. Since the fall in pressure in the cooler 12 is relatively large, a relatively large portion of the pressure with which the cooling fluid has been set under pressure by the cooling fluid pump 3 can be demonstrated in the line 8.

The vehicle 2 comprises a retarder 6 and an exhaust gas brake 7. In association with activation of the supplementary brakes, both the retarder and the exhaust gas brake are, in general, activated. An exhaust gas brake 7 requires a high rate of revolution of the engine in order to create a high braking power. The brake system in the vehicle 2 thus provides an automatic gearing down if this is required when the exhaust gas brake 7 is activated, such that it gives an effective braking effect. Since the cooling fluid pump 3 is driven by the combustion engine 1, it acquires a correspondingly high rate of revolution when the supplementary brakes 6, 7 are activated. A high rate of revolution of the cooling fluid pump results in a high pressure in the cooling system. The spring 16e is adapted to open the one-way valve when the pressure in the line 8 exceeds a pre-determined value of pressure. When the combustion engine 1 is a diesel engine, this value of pressure can correspond to a rate of revolution of the diesel engine of an order of magnitude of 1600-1700 rpm.

Cooling fluid circulates around the cooling system during operation of the combustion engine 1. In operating conditions in which the combustion engine 1 is driven with a low rate of revolution, a low pressure is obtained in the cooling system. The pressure in the line 8 is thus lower than the pressure that is required to open the one-way valve 16d against the effect of the said spring 16e. Cooling fluid from the first section of line 16a is in this way led through the one-way valve 16c and the restriction 16f, to the pilot line 16. The sensor 15 senses the temperature of the cooling fluid in the pilot line 16, which in this case corresponds to the temperature of the cooling fluid in the inlet line 4 to the combustion engine 1. If the cooling fluid has a temperature that is lower than the regulating temperature of the thermostat 9, the thermostat 9 is set into its closed condition. The cooling fluid in the line 8 is in this case led to the bypass line 10 and thus to the combustion engine 1 without undergoing cooling in the cooler 12. If the sensor 15 senses that the cooling fluid has a temperature that is higher than the regulating temperature of the thermostat 9, the thermostat 9 is set into its open condition. The cooling fluid in the line 8 is led in this case to the cooler 12 for cooling before it is led again to the combustion engine 1.

In operating conditions in which a pressure is created in the line 8 that is greater than a pre-determined value, the one-way valve 16d opens against the effect of the spring 16e. Cooling fluid is in this way led from the line 8 to the pilot line 16. Cooling fluid that is led into the pilot line 16 from the line 8 has a higher pressure such that the cooling fluid in the first section of line 16a. Cooling fluid from the first section of line 16a can in this way reach the pilot line 16. The sensor 15 senses the temperature of the cooling fluid in the pilot line 16, which in this case corresponds to the temperature of the cooling fluid in the outlet line 8 of the retarder. The regulating temperature of the thermostat 9 has been dimensioned according to the temperature that cooling fluid has in the inlet line 4 to the combustion engine 1. The temperature of the cooling fluid in the line 8 is essentially always a higher temperature than it is in the inlet line 4. When the combustion engine is driven at a high rate of revolution or when the retarder 6 has been activated, the cooling fluid in the line 8 will essentially always have a higher temperature than the regulating temperature of the thermostat 9. In such a case, the sensor 15 sets the thermostat 9 into an open condition as soon as the supplementary brakes 6, 7 are activated with a braking power above a threshold value that is defined by the pressure in the line 8. There is obtained in this way a rapid feedback and an effective cooling of the cooling fluid in operating conditions in which the retarder is activated with a braking power above the threshold value. If the pressure in the cooling system exceeds the said value in operating conditions in which the retarder is not activated, this generally means that the combustion engine is under a heavy load. Thus, with this solution, there is obtained also a rapid feedback and an effective cooling of the cooling fluid in operating conditions when the combustion engine 1 is under a heavy load.

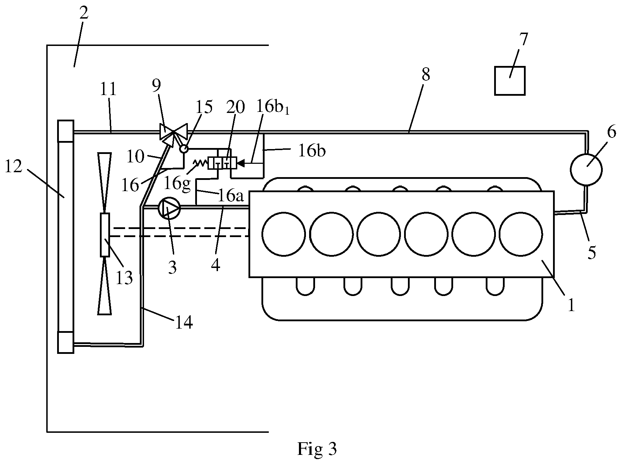

Figure 3 shows an alternative embodiment of the cooling system. In this case, the first section of line 16a and the second section of line 16b are controlled by a displaceable valve body 20 that can be defined as a three-way valve. The valve body 20 is held in a first condition with the aid of a spring 16g. When the valve body 20 is in a first position, the first section of line 16a is connected to the pilot line 16 while at the same time the valve body 20 breaks the connection between the second section of line 16b and the pilot line 16. The second section of line 16b comprises a section of line 16b₁ that exerts a pressure on the valve body 20 in an opposing direction to that of the spring 16g. The spring 16g is dimensioned such that it holds the valve body 20 in the first condition with a pre-determined pressure. When there is then created in the line 8, and thus also in the section of line 16b₁, a pressure that is higher than the pressure that the spring 16g exerts, the valve body 20 is displaced to a second position. In the second position, the valve body 20 connects the second section of line 16b to the pilot line 16, while at the same time the connection between the second section of line 16b and the pilot line 16 is broken.

Cooling fluid circulates around the cooling system during operation of the combustion engine 1. In operating conditions in which the combustion engine 1 is driven with a low rate of revolution, a low pressure is obtained in the cooling system. The pressure in the line 8 is thus lower than the pressure that is required to open the one-way valve 16d. Cooling fluid from the first section of line 16a is in this way led to the pilot line 16. The sensor 15 senses the temperature of the cooling fluid in the pilot line 16, which in this case corresponds to the temperature of the cooling fluid in the inlet line 4 to the combustion engine 1. If the cooling fluid has a temperature that is lower than the regulating temperature of the thermostat 9, the thermostat 9 is set into its closed condition. The cooling fluid in the line 8 is led in this case to the bypass line 10 and thus to the combustion engine 1 without undergoing cooling in the cooler 12. If the sensor 15 senses that the cooling fluid has a temperature that is higher than the regulating temperature of the thermostat 9, the thermostat 9 is set into its open condition. The cooling fluid in the line 8 is led in this case to the cooler 12 for cooling before it is led again to the combustion engine 1.

In operating conditions in which a pressure is created in the line 8 that is greater than the pre-determined value, the one-way valve 16d opens against the effect of the spring 16e. Cooling fluid is in this way led from the line 8 to the pilot line 16. The sensor 15 senses the temperature of the cooling fluid in the pilot line 16, which in this case corresponds to the temperature of the cooling fluid in the outlet line 8 of the retarder. The regulating temperature of the thermostat 9 has been dimensioned according to the temperature that cooling fluid has in the inlet line 4 to the combustion engine 1. The temperature of the cooling fluid in the line 8 is essentially always a higher temperature than it is in the inlet line 4. In particular, when the combustion engine is driven at a high rate of revolution or when the retarder 6 has been activated, the cooling fluid in the line 8 will essentially always have a higher temperature than the regulating temperature of the thermostat 9. In such a case, the sensor 15 sets the thermostat 9 into an open condition as soon as the supplementary brakes 6, 7 are activated with a braking power above a threshold value that is defined by the pressure in the line 8. There is obtained in this way a rapid feedback and an effective cooling of the cooling fluid in operating conditions in which the retarder is activated with a braking power above a threshold value. At the same time, a rapid feedback and an effective cooling of the cooling fluid is obtained in operating conditions in which the combustion engine 1 is driven at a high rate of revolution. A high rate of revolution of the engine normally means that the engine is under a heavy load and that the cooling fluid should be given a thorough cooling.

The invention is not in any way limited to the embodiment that has been described in the drawings: it can be freely varied within the scope of the patent claims. The component that can be activated intermittently is exemplified in the embodiments as a hydraulic retarder. The component that can be activated intermittently, however, may be any freely chosen component that requires a high cooling power.

## Claims

1. A cooling system in a vehicle for the cooling of a combustion engine (1) and a component (6) that can be activated intermittently, whereby the cooling system comprises a cooling fluid pump (3) that is adapted to circulate cooling fluid in the cooling system, a cooler (12) for the cooling of the cooling fluid, a pilot line (16) that comprises a first inlet section (16a) where the cooling fluid is received from a line (4) in the cooling system that leads the cooling fluid into the combustion engine (1) and a second inlet section (16b) that receives cooling fluid from a line (8) in the cooling system that receives cooling fluid from the said component (6), a sensor (15) that is adapted to sense the temperature of the cooling fluid in the pilot line (16) and a thermostat (9) that is adapted to lead the cooling fluid to the combustion engine (1) without cooling when the sensor (15) senses that the temperature of the cooling fluid in the pilot line (16) is lower than a regulating temperature, and to lead the cooling fluid to the cooler (12) before it is led to the combustion engine (1) when the sensor senses that the temperature of the cooling fluid in the pilot line (16) is higher than the regulating temperature, **characterised in that** the cooling system comprises a valve arrangement (16c, 16d, 17, 20) that in first condition only leads cooling fluid from the first inlet section (16a) to the pilot line (16) and in a second condition only leads cooling fluid from the second inlet section (16b) to the pilot line (16) and control means (16b₁, 16e, 16g, 18) that is adapted to set the valve arrangement into the first condition when said component is activated and requires a cooling power that is lower than a threshold value and into the second condition when said component (6) is activated and requires a cooling power that is higher than the threshold value.

2. The cooling system according to claim 1, **characterised in that** the valve arrangement comprises a three-way valve (17).

3. The cooling system according to claim 1 or 2, **characterised in that** the said control means comprises a control unit (18) that is adapted to receive information (19) with respect to at least one parameter that indicates whether the said component (6) requires a lower or a higher cooling power than the said threshold value and to set the valve arrangement (17) into the first condition or into the second condition with the aid of this information.

4. The cooling system according to any one of the preceding claims, **characterised in that** the said component is a hydraulic retarder (6).

5. The cooling system according to claim 4, **characterised in that** the hydraulic retarder (6) has cooling fluid as its working medium.

6. The cooling system according to claim 4 or 5, **characterised in that** the vehicle comprises also an exhaust gas brake (7) and that the said control means (16b1, 16e, 16g) is adapted to set the valve arrangement into the first condition or into the second condition depending on the pressure of the cooling fluid in the cooling system.

7. The cooling system according to claim 6, **characterised in that** the said control means (16b1, 16e, 16g) is adapted to set the valve arrangement into the first condition or into the second condition depending on the pressure of the cooling fluid in the line (8) that receives cooling fluid from the said component (6).

8. The cooling system according to claim 6 or 7, **characterised in that** the first inlet section (16a) comprises a first one-way valve (16c) and a restriction (16f) and that the second inlet section (16b) comprises a second one-way valve (16d) that is maintained in a closed condition by a spring (16e), whereby the said spring (16e) is dimensioned such that the second one-way valve (16e) opens such that cooling fluid is led from the second inlet section (16b) to the pilot line (16) when the pressure in the cooling system exceeds a pre-determined level.

9. The cooling system according to any one of the preceding claims, **characterised in that** the cooling fluid pump (3) is arranged in the line (4) that leads cooling fluid to the combustion engine (1) and that the first inlet section (16a) receives cooling fluid in the line (4) at a position downstream of the cooling fluid pump (3).

10. The cooling system according to any one of the preceding claims, **characterised in that** the pilot line (16) has an outlet that is located in a bypass line (10) that leads cooling fluid from the thermostat (9) to the inlet line (4) of the combustion engine.

## Patentansprüche

1. Kühlsystem in einem Fahrzeug zum Kühlen eines Verbrennungsmotors (1) und einer Komponente (6), welche zeitweise aktiviert werden kann, wobei das Kühlsystem umfasst: eine Kühlfluidpumpe (3), die dazu vorgesehen ist, Kühlfluid in dem Kühlsystem zirkulieren zu lassen, einen Kühler (12) zum Kühlen des Kühlfluids, eine Steuerleitung (16), welche einen ersten Einlassabschnitt (16a) umfasst, wo das Kühlfluid von einer Leitung (4) in dem Kühlsystem, welche das Kühlfluid in den Verbrennungsmotor (1) führt, entgegengenommen wird, und welche einen zweiten Einlassabschnitt (16b) umfasst, der Kühlfluid von einer Leitung (8) in dem Kühlsystem entgegennimmt, die Kühlfluid von der Komponente (6) entgegennimmt, einen Sensor (15), der dazu vorgesehen ist, die Temperatur des Kühlfluids in der Steuerleitung (16) zu erfassen und einen Thermostat (9), der dazu vorgesehen ist, dass Kühlfluid ohne Kühlen zu den Verbrennungsmotor (1) zu leiten, wenn der Sensor (15) ermittelt, dass die Temperatur des Kühlfluids in der Steuerleitung (16) niedriger ist als eine Regeltemperatur, und der dazu vorgesehen ist, das Kühlfluid zu dem Kühler (12) zu leiten, bevor dieses zu dem Verbrennungsmotor (1) geleitet wird, wenn der Sensor ermittelt, dass die Temperatur des Kühlfluids in der Steuerleitung (16) höher ist als die Regeltemperatur, **dadurch gekennzeichnet, dass** das Kühlsystem eine Ventilanordnung (16c, 16d, 17, 20), welche in einem ersten Betriebszustand Kühlfluid lediglich von dem ersten Einlassabschnitt (16a) zu der Steuerleitung (16) leitet und welche in einem zweiten Betriebszustand Kühlfluid lediglich von dem zweiten Einlassbereich (16b) zu der Steuerleitung (16) leitet, sowie ein Steuermittel (16b₁, 16e, 16g, 18) aufweist, welches dazu vorgesehen ist, die Ventilanordnung in den ersten Betriebszustand zu versetzen, wenn die Komponente aktiviert ist und eine Kühlleistung benötigt, die niedriger ist als ein Schwellenwert, und welches dazu vorgesehen ist, die Ventilanordnung einen zweiten Betriebszustand zu versetzen, wenn die Komponente (6) aktiviert ist und eine Kühlleistung benötigt, die höher ist als der Schwellenwert.

2. Kühlsystem nach Anspruch 1, **dadurch gekennzeichnet, dass** die Ventilanordnung ein Dreiwegeventil (17) aufweist.

3. Kühlsystem nach Anspruch 1 oder 2, **dadurch gekennzeichnet, dass** das Steuermittel eine Steuereinheit (18) aufweist, die dazu vorgesehen ist, Information (19) bezüglich zumindest eines Parameters, der anzeigt, ob die Komponente (6) eine niedrigere oder eine höhere Kühlleistung als den Schwellenwert benötigt, zu empfangen und die Ventilanordnung (17) unter Zuhilfenahme der Information in den ersten Betriebszustand oder in den zweiten Betriebszustand zu versetzen.

4. Kühlsystem nach einem der vorhergehenden Ansprüche, **dadurch gekennzeichnet, dass** die Komponente ein hydraulischer Retarder (6) ist.

5. Kühlsystem nach Anspruch 4, **dadurch gekennzeichnet, dass** der hydraulische Retarder (6) ein Kühlfluid als sein Arbeitsmedium aufweist.

6. Kühlsystem nach Anspruch 4 oder 5, **dadurch gekennzeichnet, dass** das Fahrzeug auch eine Abgasbremse (7) aufweist und dadurch, dass das Steuermittel (16b₁, 16e, 16g) dazu vorgesehen ist, die Ventilanordnung in Abhängigkeit von dem Druck des Kühlfluids in dem Kühlsystem in den ersten Betriebszustand oder in den zweiten Betriebszustand zu versetzen.

7. Kühlsystem nach Anspruch 6, **dadurch gekennzeichnet, dass** das Steuermittel (16b₁, 16e, 16g) dazu vorgesehen ist, die Ventilanordnung in Abhängigkeit von dem Druck des Kühlfluids in der Leitung (8), die Kühlfluid von der Komponente (6) entgegennimmt, in den ersten Betriebszustand oder in den zweiten Betriebszustand zu versetzen.

8. Kühlsystem nach Anspruch 6 oder 7, **dadurch gekennzeichnet, dass** der erste Einlassabschnitt (16a) ein erstes Ein-Wege-Ventil (16c) und eine Drosselung (16f) aufweist und dadurch, dass der zweite Einlassabschnitt (16b) ein zweites Ein-Wege-Ventil (16d) aufweist, welches von einer Feder (16) in einem geschlossenen Zustand gehalten wird, wobei die Feder (16) derart dimensioniert ist, dass das zweite Ein-Wege-Ventil (16e) öffnet, sodass das Kühlfluid von dem zweiten Einlassabschnitt (16b) zu der Steuerleitung (16) geleitet wird, wenn der Druck in dem Kühlsystem ein vorgegebenes Niveau überschreitet.

9. Kühlsystem nach einem der vorhergehenden Ansprüche, **dadurch gekennzeichnet, dass** die Kühlfluidpumpe (3) in der Leitung (4), die Kühlfluid zu dem Verbrennungsmotor (1) leitet, angeordnet ist und dadurch, dass der erste Einlassabschnitt (16a) Kühlfluid in der Leitung (4) an einer Position abströmseitig bezüglich der Kühlfluidpumpe (3) empfängt.

10. Kühlsystem nach einem der vorhergehenden Ansprüche, **dadurch gekennzeichnet, dass** die Steuerleitung (16) einen Auslass aufweist, der in einer Umgehungsleitung (10) positioniert ist, die Kühlfluid von dem Thermostat (9) zu der Einlassleitung (4) des Verbrennungsmotors (1) leitet.

## Revendications

1. Système de refroidissement dans un véhicule pour le refroidissement d'un moteur à combustion (1) et d'un composant (6) qui peut être activé de façon intermittente, dans lequel le système de refroidissement comprend une pompe (3) pour le fluide de refroidissement qui est adaptée pour faire circuler le fluide de refroidissement dans le système de refroidissement, un radiateur (12) pour le refroidissement du fluide de refroidissement, une ligne pilote (16) qui comprend une première partie d'entrée (16a) où le fluide de refroidissement est reçu d'une ligne (4) dans le système de refroidissement qui conduit le fluide de refroidissement dans le moteur à combustion (1) et une deuxième partie d'entrée (16b) qui reçoit du fluide de refroidissement d'une ligne (8) dans le système de refroidissement qui reçoit du fluide de refroidissement du composant (6), un capteur (15) qui est adapté pour capter la température du fluide de refroidissement dans la ligne pilote (16) et un thermostat (9) qui est adapté pour conduire le fluide de refroidissement au moteur à combustion (1) sans refroidissement lorsque le capteur (15) constate que la température du fluide de refroidissement dans la ligne pilote (16) est inférieure à une température de réglage et pour conduire le fluide de refroidissement au radiateur (12) avant qu'il ne soit conduit au moteur à combustion (1) lorsque le capteur constate que la température du fluide de refroidissement dans la ligne pilote (16) est supérieure à la température de réglage, **caractérisé en ce que** le système de refroidissement comprend un agencement de valves (16c, 16d, 17, 20) qui conduit du fluide de refroidissement uniquement de la première partie d'entrée (16a) à la ligne pilote (16) en présence d'une première condition et qui conduit du fluide de refroidissement uniquement de la deuxième partie d'entrée (16b) à la ligne pilote (16) en présence d'une deuxième condition, et des moyens de commande (16b₁, 16e, 16g, 18) qui sont adaptés pour mettre l'agencement de valves dans la première condition lorsque le composant est activé et demande une puissance de refroidissement qui est inférieure à une valeur seuil, et dans la deuxième condition lorsque le composant (6) est activé et demande une puissance de refroidissement qui est supérieure à la valeur seuil.

2. Système de refroidissement selon la revendication 1, **caractérisé en ce que** l'agencement de valves comprend une valve à trois voies (17).

3. Système de refroidissement selon la revendication 1 ou 2, **caractérisé en ce que** les moyens de commande comprennent une unité de commande (18) qui est adaptée pour recevoir des informations (19) concernant au moins un paramètre qui indique si le composant (6) demande une puissance de refroidissement inférieure ou supérieure à la valeur seuil et pour mettre l'agencement de valves (17), à l'aide de ces informations, dans la première condition ou dans la deuxième condition.

4. Système de refroidissement selon l'une des revendications précédentes, **caractérisé en ce que** le composant est un ralentisseur hydraulique (6).

5. Système de refroidissement selon la revendication 4, **caractérisé en ce que** le ralentisseur hydraulique (6) utilise le fluide de refroidissement comme fluide de travail.

6. Système de refroidissement selon la revendication 4 ou 5, **caractérisé en ce que** le véhicule comprend aussi un frein à gaz d'échappement (7) et **en ce que** les moyens de commande (16b₁, 16e, 16g) sont adaptés pour mettre l'agencement de valves (17) dans la première condition ou dans la deuxième condition en fonction de la pression du fluide de refroidissement dans le système de refroidissement.

7. Système de refroidissement selon la revendication 6, **caractérisé en ce que** les moyens de commande (16b₁, 16e, 16g) sont adaptés pour mettre l'agencement de valves dans la première condition ou dans la deuxième condition en fonction de la pression du fluide de refroidissement dans la ligne (8) qui reçoit du fluide de refroidissement du composant (6).

8. Système de refroidissement selon la revendication 6 ou 7, **caractérisé en ce que** la première partie d'entrée (16a) comprend une première valve à une voie (16c) et un étranglement (16f) et **en ce que** la deuxième partie d'entrée (16b) comprend une deuxième valve à une voie (16d) qui est maintenue en un état fermé par un ressort (16e), le ressort (16e) ayant des dimensions telles que la deuxième valve à une voie (16d) ouvre de manière telle que du fluide de refroidissement est conduit de la deuxième partie d'entrée (16b) à la ligne pilote (16) lorsque la pression dans le système de refroidissement dépasse un niveau prédéterminé.

9. Système de refroidissement selon l'une des revendications précédentes, **caractérisé en ce que** la pompe (3) pour le fluide de refroidissement est disposée dans la ligne (4) qui conduit du fluide de refroidissement au moteur à combustion (1) et **en ce que** la première partie d'entrée (16a) reçoit du fluide de refroidissement dans la ligne (4) à une position en aval de la pompe (3) pour le fluide de refroidissement.

10. Système de refroidissement selon l'une des revendications précédentes, **caractérisé en ce que** la ligne pilote (16) comprend une sortie qui est située dans une ligne by-pass (10) qui conduit du fluide de refroidissement du thermostat (9) à la ligne d'entrée (4) du moteur à combustion.
